# EUROPEAN PATENT SPECIFICATION

(11) **EP 1 348 365 B1**
(45) Date of publication and mention of the grant of the patent: **21.12.2005**
(21) Application number: 02255714.4
(22) Date of filing: 15.08.2002
(51) Int. Cl.: A47J 36/02

(54) **Cooking containers**
Kochbehälter
Recipient de cuisine

(30) Priority: 26.03.2002 KR 2002016388
(43) Date of publication of application: 01.10.2003
(73) Proprietor: SAMSUNG ELECTRONICS CO., LTD., Suwon-si, Gyeonggi-do 442-742 (KR)
(72) Inventor: Hoh, Jung-Eui, Suwon-City, Kyungki-Do (KR)
(74) Representative: Derry, Paul Stefan

(56) References cited:
- WO-A-02/39861
- US-A- 3 941 967
- US-A- 3 994 212
- US-A- 4 413 167
- US-A- 4 847 459
- US-A- 4 862 791
- US-A- 4 871 892

## Description

The present invention relates to a cooking container comprising a body and a lid, each of said body and said lid including a heating part, which generates heat when supplied with microwaves, and a heat transfer part arranged, in use, to transfer heat from the heating part to food in the container.

A microwave oven is an electrically operated oven, which heats food placed in its cooking cavity using high-frequency electromagnetic waves, typically generated by a magnetron. During operation of such a microwave oven, high-frequency electromagnetic waves, so-called "microwaves," are radiated through the cooking cavity. The microwaves penetrate food and cause the molecules of moisture to vibrate, providing heat within the food to cook it. A cooking tray may be set at the bottom of the cooking cavity, and be loaded with food. The cooking tray is usually rotated at a low speed, thus allowing the microwaves to penetrate uniformly the food.

A variety of cooking containers have been used to contain food therein when it is desired to cook or heat food a microwave oven. Such cooking containers are typically made of materials capable of allowing a transmission of microwaves through them to cook or heat the food. In recent years, some containers have been used, specifically designed for microwave ovens, which emit heat when exposed to microwaves, thus browning or scorching slightly both (top and bottom) sides of food, such as sliced bread, pizza, or fish contained therein. The reader is directed to WO-A-0239861, US-A-4871892, US-A-4847459 and US-A-4413167 for further information.

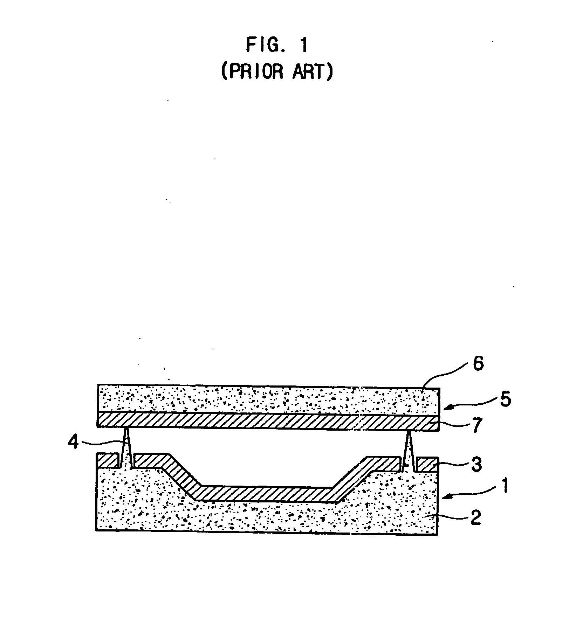

Figure 1 shows a conventional cooking container used with microwave ovens, the container being designed to brown or scorch slightly both sides of food, such as sliced bread or pizza.

As illustrated, the conventional cooking container comprises a pan body 1, on which food, such as sliced bread or pizza, is placed. The open top of the body 1 is provided with a lid 5 to cover food. The body 1 consists of a heating part 2 and a heat transfer part 3. The heating part 2 is made of a mixture of rubber and ferrite, and becomes heated when it is exposed to microwaves. The heat transfer part 3 is formed on the upper surface of the heating part 2, and transfers heat from the heating part 2 to the lower side of the food. In the same manner as that described for the pan body 1, the lid 5 consists of a heating part 6 and a heat transfer part 7. The heating part 6 of the lid 5 is made of a mixture of rubber and ferrite, and becomes heated when it is exposed to microwaves. The heat transfer part 7 of the lid 5 is formed on the lower surface of the heating part 6, and transfers heat from the heating part 6 to the upper side of the food.

In order to space the lid 5 from the body 1, thereby preventing an undesired generation of microwave-induced sparks between the body 1 and the lid 5, a plurality of spacers 4 extend upward from the heating part 2 of the body 1 such that the spacers 4 pass through the heat transfer part 3 until they project by a predetermined amount from the upper surface of said heat transfer part 3.

In order to brown or scorch slightly both sides of food, such as sliced bread or pizza, using such a cooking container, the food is placed in the body 1 and covered with the lid 5, and the container is then seated in the cooking cavity of the microwave oven. On operating the microwave oven after seating the container in the cooking cavity, the two heating parts 2 and 6 absorb the microwaves, and transfer heat to the associated heat transfer parts 3 and 7 such that they are intensely heated to increase their temperatures.

However, the two heat transfer parts of such cooking containers are typically made of aluminum, which can present problems when the aluminium heat transfer parts come into direct contact with food during cooking. Food which is either add or alkaline can corrode the aluminum heat transfer parts. Also, the food may be spoilt where it contacts the corroded areas of the heat transfer parts, which can be potentially harmful to health. Also, it is fairly easy for food to be excessively scorched by and/or become stuck to the highly heated aluminum surfaces of the heat transfer parts. In such a case, the food can give off an unpleasant odour. It can also be very difficult to dean such cooking containers when food is stuck to and excessively scorched at the aluminum surfaces of the heat transfer parts.

Due to the spacers provided at the pan body to prevent the generation of microwave-induced sparks between the body and the lid, it is common for the lid not to come into contact with the upper side of food placed in the container. In such a case, a sufficient quantity of heat will not be transferred to the upper side of the food, and so the upper and lower sides of the food may not be uniformly cooked.

Sliced bread or pizza typically contains a substantial quantity of moisture, and generates steam during the process of cooking. However, the conventional cooking container used with microwave ovens does not have any means to effectively or quickly exhaust such steam, and so a steam layer may be formed between the lower side of food and the body of the container, thus limiting the browning or scorching effects of the container.

Another problem of the conventional cooking containers is that they tend to have a structure which is suitable for cooking only one kind of food at one time, thus forcing a user wanting, for example, to eat toasted bread with fried eggs to fry the eggs and toast the sliced bread separately.

It is an aim of the present invention to provide a cooking container which is better able to brown and scorch slightly both sides of food at the same time.

It is another aim of the present invention to provide a cooking container which is processed on its food contact surfaces such that the food contact surfaces do not undergo any chemical reaction with food and does not allow the food to be stuck to the food contact surfaces.

A cooking container, according to the present invention, is characterised in that both of the body and the lid are provided on an inside surface thereof with at least one embossment which, in use, contacts food in the container

Preferably, two or more embossments are provided on the body and/or the lid. More preferably, three or more embossments are regularly spaced from each other.

Preferably, the body includes as central raised portion, with any embossments of the body being formed on the central raised portion. More preferably, a channel around the central raised portion is formed with vent holes, preferably regularly spaced, for the release of steam.

Preferably, the lid includes a central downwardly protruding portion, with any embossments of the lid being formed on the central downwardly protruding portion. More preferably, a channel around the central downwardly protruding portion is formed with vent holes, preferably regularly spaced, for the release of steam.

Preferably, one or both of said body and said lid is provided with a plurality of holes, preferably regularly spaced, to allow steam to exhaust from the container.

Preferably, each embossment has an elongate convex shape. More preferably, the or each embossment on the body is arranged, in use, so as to be parallel to the or each embossment of the lid.

Preferably, interior surfaces of the body and the lid are provided with a coating, preferably a fluorine resin, to resist the sticking of food.

Preferably, the heat transfer parts are made from aluminium and are provided with a coating, preferably a fluorine resin, to prevent corrosion of the aluminum.

Preferably, the heating parts are made of a mixture of silicon rubber and ferrite powder, the ratio of the ferrite powder to the silicon rubber being higher in the body than in the lid.

Preferably, the heating part of the body forms a thicker layer than the heating part of the lid.

Preferably, the body and the lid are contained in upper and lower casings, respectively, which are made of a non-microwave-absorbing material. More preferably, the upper and lower casings are made of a material able to resist heat produced by the body and the lid, and at least portions of the casings contact with or are proximate to the body and the lid. Still more preferably, the lower casing is provided with a drain hole at the bottom thereof. Even more preferably, the inside surface of the lower casing is inclined to guide moisture to the drain hole.

Preferably, the sectional area of the body is larger than that of the lid.

Preferably, the body and the lid together define a first cooking part, which is preferably rectangular in shape, and a second cooking part, which is preferably substantially square in shape, extends from said first cooking part. More preferably, said first cooking part is capable of toasting a first type of food and said second cooking part is capable of cooking without toasting a second type of food. Still more preferably, said first type of food is sliced bread and said second type of food comprises at least one egg. Thus a preferred embodiment of the present invention provides a cooking container which can cook sliced bread and eggs at the same time, thus allowing a user to easily and quickly prepare toasted bread with fried eggs.

The invention also provides a microwave oven including a cooking container as claimed in any of the claims.

The invention will now be described, by way of example only, with reference to the accompanying drawings, of which:
Figure 1 is a sectional view of a conventional cooking container used with microwave ovens;
Figure 2 is a perspective view illustrating the construction of a body and lid of a cooking container used with microwave ovens in accordance with an embodiment of the present invention when the lid is separated from the body;
Figure 3 is a plan view of the cooking container of Figure 2, with the lid placed on the body;
Figure 4 is a sectional view of the cooking container of Figure 3 taken along the line IV-IV of Figure 3;
Figure 5 is a sectional view illustrating the body and lid of the cooking container of Figure 4 when they are housed in upper and lower casings; and
Figure 6 is a perspective view illustrating the cooking container of Figure 2 seated in the cooking cavity of a microwave oven.

In the drawings, like reference numerals refer to like elements throughout.

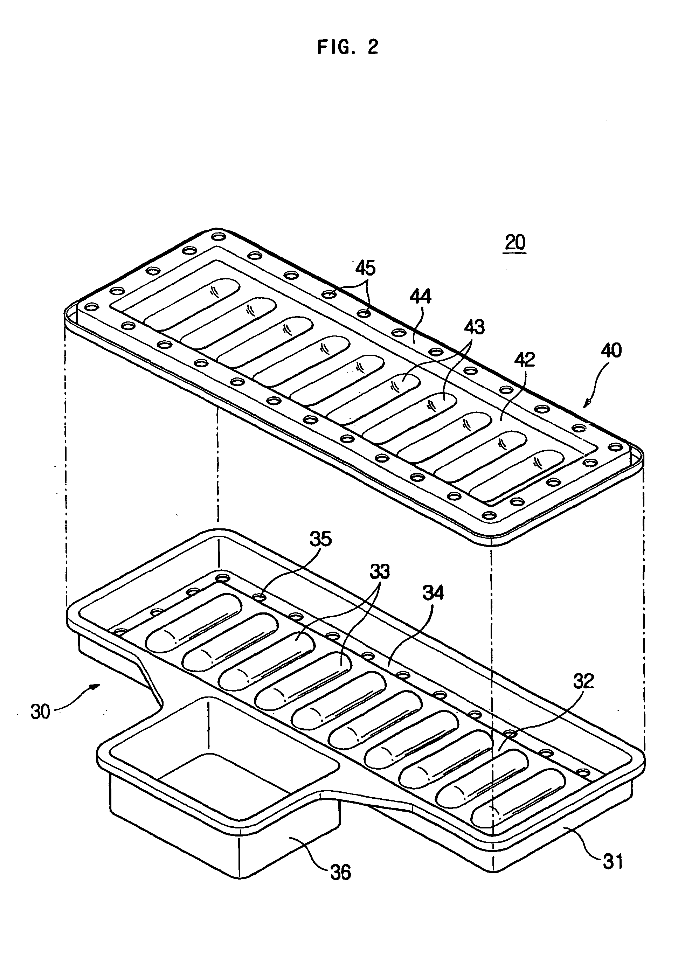

Figure 2 is a view illustrating the construction of a pan body 30 and lid 40 of a cooking container 20. As illustrated in the figure, the pan body 30 includes a first cooking part 31 and a second cooking part 36. The first cooking part 31 has a rectangular profile, The second cooking part 36 has a generally square profile and is formed at one edge of the first cooking part 31.

The first cooking part 31 has an uplifted portion 32, which is formed at the central area of the bottom of said part 31. Formed at regular intervals on the uplifted portion 32 are a plurality of upwardly projecting embossments 33. The outside edges of the uplifted portion 32 are spaced apart from the sidewalls of the first cooking part 31 by a channel 34 having a constant width. The edges of the uplifted portion thus extend parallel to the sidewalls of the first cooking part 31 while defining the channel 34 along the gap between the outside edges of the uplifted portion 32 and the sidewalls of the first cooking part 31. A plurality of exhaust holes 35 are regularly formed along the bottom of the rectangular channel 34. The embossments 33 each have a longitudinal shape, and are arranged such that their lengthwise direction is transverse to the longest side of the first cooking part 31. Due to the embossments 33, the uplifted portion 32 has a rugged upper surface.

The open top of the first cooking part 31 of the body 30 is covered with the lid 40. With the lid 40 covering the body 30, both sides of food, such as sliced pieces of bread or sectored pieces of pizza received in the container 20, can be appropriately browned or scorched. The first cooking part 31 is sized to contain a predetermined number of sliced pieces of bread therein without leaving an excessive surplus space. That is, the first cooking part 31 can be sized such that its width is slightly larger than the length of a sliced piece of bread, and its length is slightly larger than the total width of a predetermined number, e.g. two or three, of sliced pieces of bread which are required to be toasted at the same time using the container 20. As a result, the predetermined number of sliced pieces of bread can be neatly arranged in the first cooking part during toasting.

The second cooking part 36 is integrally formed at one of the two long sidewalls of the first cooking part 31. This second cooking part 36 has a predetermined depth suitable for containing an egg for frying.

The lid 40 has a construction similar to that of the first cooking part 31. That is, the lid 40 has a downwardly bulged portion 42 at the central area of the top wall of the lid 40. Regularly formed on the bulged portion 42 are a plurality of downwardly projecting embossments 43. In the same manner as that described for the first cooking part 31 of the pan body 30, a second edge channel 44 having a rectangular shape is formed along the gap between the outside edge of the bulged portion 42 and the sidewalls of the lid 40. A plurality of exhaust holes 45 are formed at regular intervals along the edge channel 44. The exhaust holes 45 allow for the escape of steam generated by food during cooking.

In an effort to prevent the introduction of microwaves to food inside the first cooking part 31, each of the exhaust holes 35 and 45 is preferably sized to have a diameter not larger than 15 mm, which is equal to approximately 1/8 of the wavelength of microwaves at 2450 MHz.

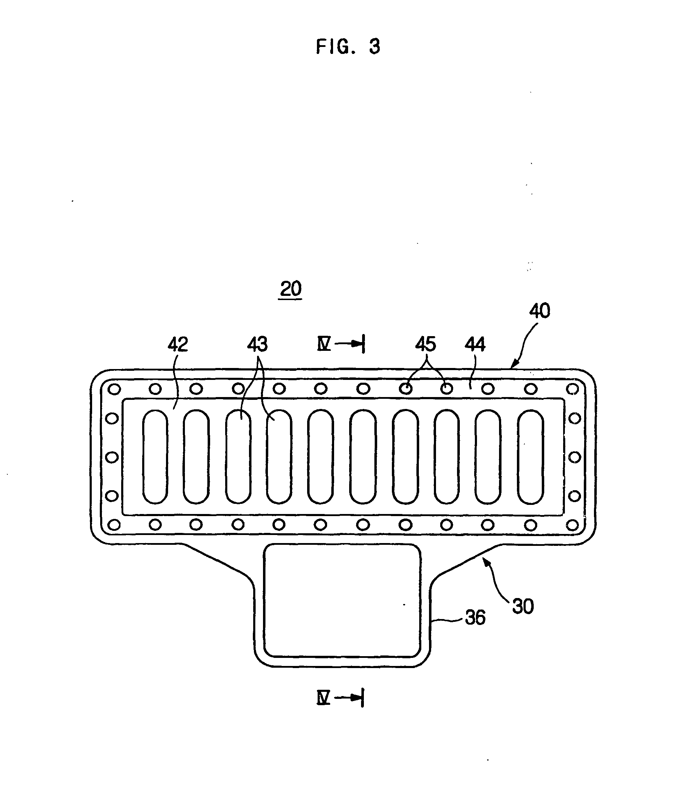

Figure 3 is a plan view of the cooking container 20, with the lid 40 covering the first cooking part 31 of the body 30. As illustrated in the figure, the lid 40 has a construction similar to that of the first cooking part 31, and covers the upper side of food therein, such as sliced pieces of bread or sectored pieces of pizza neatly seated in the first cooking part 31. The open top of the second cooking part 36 used to fry eggs is not covered, but is kept open during the process of frying.

During the process of cooking, food placed in the first cooking part 31 comes into contact with the upward and downward embossments 33 and 43 at its lower and upper sides, respectively, and is cooked by heat emitted by the body 30 and the lid 40. Steam generated by the food during the cooking process passes through the gaps formed between the embossments 33 and 43, and is allowed to escape from the container 20 through a gap which is formed between the outside edges of the first cooking part 31 and the lid 40 due to the thickness of the food. Steam can also escape through the exhaust holes 35 and 45, and so it is possible to appropriately brown and scorch slightly both sides of the food. The lid 40 rests on the food, rather than on the body 30, by virtue of the provision of raised portions 32, 42 which extend to such an extent that there is only a small gap (less then the thickness of a thin slice of bread) between them when the lid 40 is placed on the body 30 with no food therebetween.

An egg, placed on the bottom of the second cooking part 36 during the process of cooking, is fried at its lower side by heat of the bottom of the cooking part 36. The upper side of the egg is exposed to the microwaves, thus allowing it to be cooked directly by the microwaves .

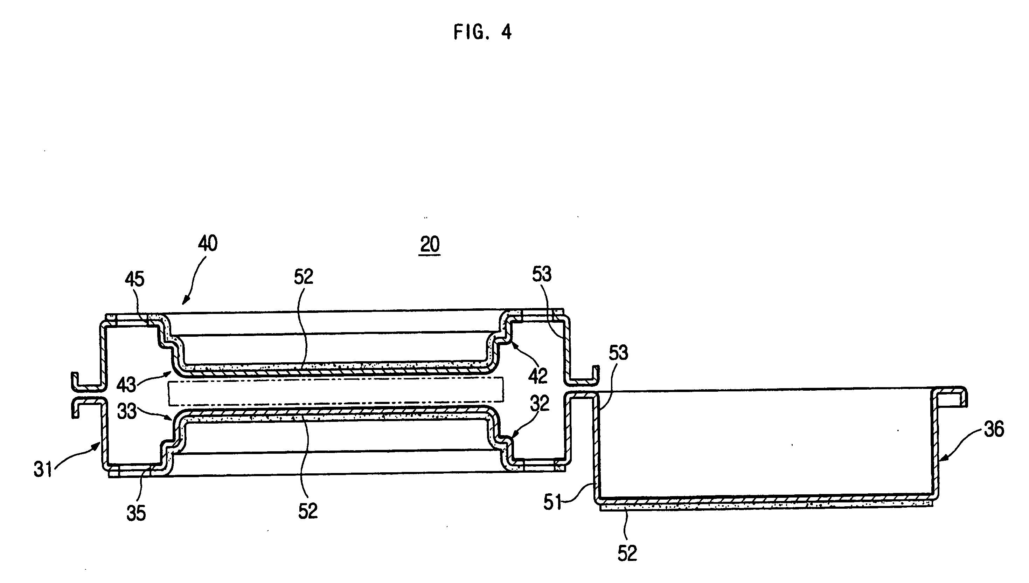

Figure 4 is a sectional view of the cooking container 20 taken along the line IV-IV of Figure 3. The base frame of the pan body 30 and the lid 40 each include by a heat transfer part 51. A heating part 52 is formed on the heat transfer part 51 of each of the body 30 and the lid 40. The heating part 52 of the pan body 30 is formed on the lower surface of the pan body's heat transfer part 51 at positions corresponding to the bottom walls of the first and second cooking parts 31 and 36. The heating part 52 of the lid 40 is formed on the upper surface of the lid's heat transfer part 51 at a position corresponding to the top wall of the lid 40. A coated layer 53 is formed on each exposed surface of the heat transfer parts 51.

In the cooking container 20, the heating parts are made of a mixture of silicon rubber and ferrite powder, which generates heat when it is exposed to microwaves. The amount of heat generated by such a heating part 52 increases in proportion to the weight ratio of the ferrite powder to the silicon rubber, and in proportion to the amount of material forming the heating part 52.

Because of the presence of the second cooking part 36, the cross-sectional area of the body 30 is greater than that of the lid 40. In the body 30, the heating part 52 is only formed at portions corresponding to the bottoms of the first and second cooking parts 31 and 36. Without compensation, therefore, the body 30 could fail to transfer a sufficient quantity of heat to the lower surface of food. However, the body 30 is designed such that it generates an appropriate amount more heat than the lid 40.

In particular, the mixture of silicon rubber and ferrite powder used to form the heating part 52 of the body 30 is such that the weight ratio of the ferrite powder to the silicon rubber is higher than that of the heating part 52 of the lid 40. The heating part 52 of the body 30 is thus caused to generate more heat than of the heating part 52 of the lid 40. In this way, it becomes possible to cook the upper and lower sides of food placed between the first cooking part 31 and the lid 40 at the same rate.

Alternatively or in addition, the desired difference between the heating effectiveness of the heating parts 52 of the body 30 and the lid 40 may be accomplished by designing the heating parts 52 such that the heating part 52 of the body 30 is thicker than the heating part 52 of the lid 40.

The heat transfer parts 51 of both the body 30 and the lid 40 transfer heat from the heating parts 52 to cook food placed therebetween. The heat transfer parts 51 are preferably made of a material having a high thermal conductivity, such as aluminum.

To prevent or minimize corrosion of the heat transfer parts 51 caused by chemical reactions with add or alkaline substances included in food, the heat transfer parts of the body 30 and the lid 40 are provided on the inside surface thereof with a coated layer 53 made of an appropriate material, such as a fluorine resin. The coated layer 53 also prevents food from becoming stuck to the heat transfer part 51. Cleaning is made easier by the coated layer 53. During the process of cooking with a microwave oven, both the body 30 and the lid 40 of the cooking container 20 are heated to a high temperature by the heating parts 52, which absorb microwaves and generate heat. This has the potential to make handling the cooking container 20 difficult and/or dangerous. To make handling easier and safer, the body 30 and the lid 40 of the container 20 are housed in respective additional casings, which do not generate heat when it is exposed to microwaves within a microwave oven.

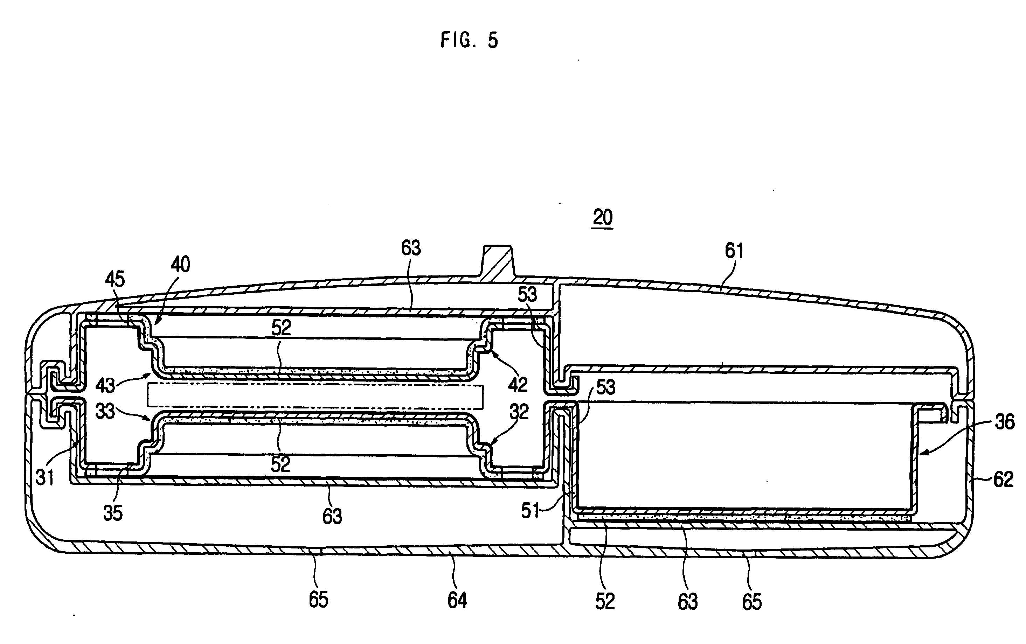

Figure 5 is a sectional view, illustrating the body 30 and the lid 40 of the cooking container 20 housed in upper and lower casings 61 and 62. As illustrated, the cooking container 20 is housed such that the first and second cooking parts 31 and 36 of the body 30 are received in the lower casing 62, and the open top of the second cooking part 36 and the lid 40 are covered with the upper casing 61.

The upper and lower casings 61 and 62 are made of a material which does not generate heat when exposed to microwaves but allows them to pass therethrough. The upper and lower casings 61 and 62 are preferably made of a heat resistant material with portions 63 thereof coming into contact with or proximate to the body 30 and the lid 40 to prevent thermal damage to the portions 63.

In addition, the lower casing 62 is provided on its bottom 64 with a plurality of drain holes 65, to allow the draining of any moisture formed by condensation from steam generated during cooking. To allow the moisture to be easily drained to the outside through the drain holes 65, the inside surface of the bottom 64 of the lower casing 62 is inclined downwards towards the holes 65.

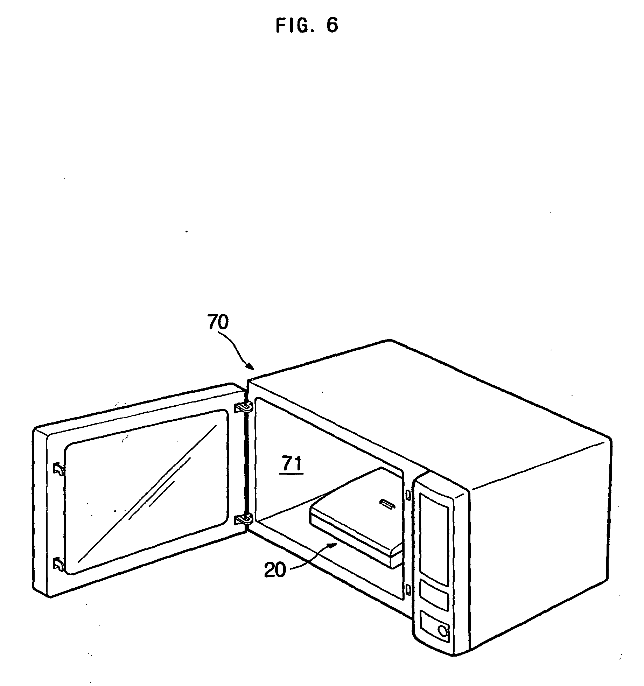

Figure 6 is a perspective view illustrating the cooking container 20 housed in the upper and lower casings 61 and 62 and included in the cooking cavity 71 of a microwave oven. The process of cooking using the cooking container 20 is described as follows with reference to Figures 5 and 6.

To prepare toasted bread with fried eggs using the container 20, several sliced pieces of bread are neatly arranged on the first cooking part 31 of the body 30 and are covered with the lid 40, and a whole de-shelled egg is placed in the second cooking part 36. The body 30 and the lid 40 are thereafter housed in the upper and lower casings 61 and 62. The container 20 is then seated in the cooking cavity 71 of the microwave oven 70. When the oven 70 is turned on, the magnetron radiates microwaves through the cooking cavity 71.

In the cooking cavity 71, the microwaves pass through the casings 61 and 62 and are absorbed by the heating parts 52 of the body 30 and the lid 40, thus causing them to generate heat The heat from the heating parts 52 of the body 30 and the lid 40 is transferred to both sides of the slices of bread, arranged on the first cooking part 31, through the heat transfer parts 51. In addition, the heat from the heating part 52 of the body 30 is transferred to the lower side of the eggs in the second cooking part 36. Both sides of sliced bread come into contact with the upward embossments 33 of the first cooking part 31 and the downward embossments 43 of the lid 40, and are thus appropriately browned and scorched. During the cooking process, steam generated by the bread passes outward through the gaps formed between the embossments 33 and 43 to reach the space defined by the edge channels 34 and 44, and then from the container 20 to the outside of the body 30 and the lid 40 through a gap, which is formed between the outside edges of the first cooking part 31 and the lid 40 by the thickness of the bread. Also, some steam is exhausted from the container 20 to the outside through the exhaust holes 35 and 45 formed at the channels 34 and 44. The steam is, thereafter, discharged from the upper and lower casings 61 and 62 to the cooking cavity 71 of the oven 70 through the gap formed between the edges of the two casings 61 and 62.Any steam which condenses on the interior surfaces of the two casings 61 and 62 to become moisture is drained to the cooking cavity 71 through the drain holes 65.

In another embodiment (not shown), the exhaust holes 35,45 are omitted. Here, steam escapes from the gap between the body 30 and the lid 40.

Covering the egg in the second cooking part 36 with the upper casing 61 such that microwaves reach the upper side of said egg, prevents undesired evaporation of moisture from the upper side of the egg during the cooking process. Eggs, or any other food placed in the second cooking part, thus can be cooked by an appropriate amount while remaining moist.

## Claims

1. A cooking container (20) comprising a body (30) and a lid (40), each of said body (30) and said lid (40) including a heating part (52), which generates heat when supplied with microwaves, and a heat transfer part (51) arranged, in use, to transfer heat from the heating part (52) to food in the container (20), **characterised in that** both of the body (30) and the lid (40) are provided on an inside surface thereof with at least one embossment (33,43) which, in use, contacts food in the container (20).

2. A cooking container according to daim 1, wherein two or more embossments are provided on the body (30) and/or the lid (40).

3. A cooking container according to claim 2, in which three or more embossments are regularly spaced from each other.

4. A cooking container as daimed in any preceding claim, in which the body (30) indudes a central raised portion (32), with any embossments of the body(30) being formed on the central raised portion (32).

5. A cooking container as daimed in claim 4, in which a channel (34) around the central raised portion (32) is formed with vent holes (35), preferably regularly spaced, for the release of steam.

6. A cooking container as claimed in any preceding claim, in which the lid (40) includes a central downwardly protruding portion (42), with any embossments of the lid (40) being formed on the central downwardly protruding portion (42).

7. A cooking container as claimed in claim 6, in which a channel (44) around the central downwardly protruding portion(42) is formed with vent holes (45), preferably regularly spaced, for the release of steam.

8. A cooking container according to any of claims 1 to 3, wherein one or both of said body (30) and said lid (40) is provided with a plurality of holes (35, 45), preferably regularly spaced, to allow steam to exhaust from the container (20).

9. A cooking container as claimed in any preceding claim, in which each embossment (33, 43) has an elongate convex shape.

10. A cooking container according to claim 9, wherein the or each embossment (33) on the body (30) is arranged, in use, so as to be parallel to the or each embossment (43) of the lid (40).

11. A cooking container according to any preceding claim, wherein interior surfaces of the body and the lid are provided with a coating (53), preferably a fluorine resin, to resist the sticking of food.

12. A cooking container according to any preceding claim, wherein the heat transfer parts (51) are made from aluminium and are provided with a coating (53), preferably a fluorine resin, to prevent corrosion of the aluminum.

13. A cooking container according to any preceding claim, wherein the heating parts (52) are made of a mixture of silicon rubber and ferrite powder, the ratio of the ferrite powder to the silicon rubber being higher in the body (40) than in the lid (30).

14. A cooking container according to any preceding claim, wherein the heating part of the body (30) forms a thicker layer than the heating part of the lid (40).

15. A cooking container according to any preceding claim, wherein the body (30) and the lid (40) are contained in upper and lower casings (61, 62), respectively, which are made of a non-microwave-absorbing material.

16. A cooking container according to daim 15, wherein the upper and lower casings (61, 62) are made of a material able to resist heat produced by the body (30) and the lid (40), and at least portions of the casings (61, 62) contact with or are proximate to the body (30) and the lid (40).

17. A cooking container according to claim 15 or claim 16, wherein the lower casing (62) is provided with a drain hole (65) at the bottom thereof.

18. A cooking container according to claim 17, wherein the inside surface of the lower casing (62) is indined to guide moisture to the drain hole (65).

19. A cooking container according to any preceding claim, wherein the sectional area of the body (30) is larger than that of the lid (40).

20. A cooking container according to any preceding claim, wherein the body (30) and the lid (40) together define a first cooking part (31), which is preferably rectangular in shape, and a second cooking part (36), which is preferably substantially square in shape, extends from said first cooking part (31).

21. A cooking container according to claim 20, wherein said first cooking part (31) is capable of toasting a first type of food and said second cooking part (36) is capable of cooking without toasting a second type of food.

22. A cooking container according to claim 21, wherein said first type of food is sliced bread and said second type of food comprises at least one egg.

23. A microwave oven (70) induding a cooking container (20) as claimed in any preceding claim.

## Patentansprüche

1. Kochbehälter (20) mit einem Hauptteil (30) und einer Abdeckung (40), wobei das Hauptteil (30) und die Abdeckung (40) jeweils aufweisen
ein Heizteil (52), das bei Zuführung von Mikrowellen Wärme erzeugt, und
ein Wärmeübertragungsteil (51), das angeordnet ist, um bei Betrieb Wärme vom Wärmeübertragungsteil (51) auf die Nahrungsmittel im Behälter (20) zu übertragen,
**dadurch gekennzeichnet, dass**
sowohl das Hauptteil (30) als auch die Abdeckung (40) an seiner/ihrer Innenfläche mit zumindest einer Ausbuchtung (33, 43) ausgestattet sind, die bei Betrieb die Nahrungsmittel im Behälter berührt.

2. Kochbehälter nach Anspruch 1, wobei zwei oder mehrere Ausbuchtungen am Hauptteil (30) und/oder an der Abdeckung (40) vorgesehen sind.

3. Kochbehälter nach Anspruch 2, bei dem drei oder mehrere Ausbuchtungen gleichmäßig voneinander beabstandet sind.

4. Kochbehälter nach einem der vorhergehenden Ansprüche, bei dem das Hauptteil (30) ein erhöhtes Mittelteil (32) aufweist, wobei jede Ausbuchtung des Hauptteils (30) auf dem erhöhten Mittelteil (32) ausgebildet ist.

5. Kochbehälter nach Anspruch 4, bei dem ein Kanal (34) um das erhöhte Mittelteil (32) mit vorzugsweise gleichmäßig beabstandeten Luftlöchern (35) zum Ablassen von Dampf ausgebildet ist.

6. Kochbehälter nach einem der vorhergehenden Ansprüche, bei dem die Abdeckung (40) ein nach unten vorstehendes Mittelteil (42) aufweist, wobei jede Ausbuchtung der Abdeckung (40) auf dem nach unten vorstehenden Mittelteil (42) ausgebildet ist.

7. Kochbehälter nach Anspruch 6, bei dem ein Kanal (44) um das nach unten vorstehende Mittelteil (42) mit vorzugsweise regelmäßig beabstandeten Luftlöchern (45) zum Ablassen von Dampf ausgebildet ist.

8. Kochbehälter nach einem der Ansprüche 1 bis 3, wobei entweder das Hauptteil (30) oder die Abdeckung (40) oder beide mit einer Vielzahl von vorzugsweise regelmäßig beabstandeten Löchern (35, 45) ausgestattet ist/sind, damit Dampf aus dem Behälter (20) entweichen kann.

9. Kochbehälter nach einem der vorhergehenden Ansprüche, bei dem jede Ausbuchtung (33, 43) eine längliche, konvexe Form aufweist.

10. Kochbehälter nach Anspruch 9, wobei die oder jede Ausbuchtung (33) auf dem Hauptteil (30) so angeordnet ist, dass sie bei Betrieb parallel zu der oder jeder Ausbuchtung (43) der Abdeckung (40) ist.

11. Kochbehälter nach einem der vorhergehenden Ansprüche, wobei die Innenflächen des Hauptteils und der Abdeckung mit einem Belag (53), vorzugsweise einem Fluorharz, ausgestattet sind, um beständig gegen Ankleben von Nahrungsmitteln zu sein.

12. Kochbehälter nach einem der vorhergehenden Ansprüche, wobei die Wärmeübertragungsteile (51) aus Aluminium bestehen und mit einem Belag (53), vorzugsweise einem Fluorharz, ausgestattet sind, um einer Korrosion des Aluminiums vorzubeugen.

13. Kochbehälter nach einem der vorhergehenden Ansprüche, wobei die Heizteile (52) aus einer Mischung aus Silikongummi und Ferritpulver bestehen, wobei das Verhältnis von Ferritpulver zu Silikongummi beim Hauptteil (30) höher ist als bei der Abdeckung (40).

14. Kochbehälter nach einem der vorhergehenden Ansprüche, wobei das Heizteil des Hauptteils (30) eine dickere Schicht als das Heizteil der Abdeckung (40) ausbildet.

15. Kochbehälter nach einem der vorhergehenden Ansprüche, wobei das Hauptteil (30) und die Abdeckung (40) in einem oberen bzw. unteren Gehäuse (61, 62) enthalten sind, die aus einem Material bestehen, das Mikrowellen nicht absorbiert.

16. Kochbehälter nach Anspruch 15, wobei das obere und untere Gehäuse (61, 62) aus einem Material bestehen, das gegen die durch das Hauptteil (30) und die Abdeckung (40) erzeugte Wärme beständig ist, und zumindest Teile der Gehäuse (61, 62) das Hauptteil (30) und die Abdeckung (40) berühren oder nahe bei ihnen liegen.

17. Kochbehälter nach Anspruch 15 oder 16, wobei das untere Gehäuse (62) an seinem Boden mit einem Abflussloch (65) ausgestattet ist.

18. Kochbehälter nach Anspruch 17, wobei die Innenfläche des unteren Gehäuses (62) geneigt ist, um Feuchtigkeit zum Abflussloch (65) zu führen.

19. Kochbehälter nach einem der vorhergehenden Ansprüche, wobei der Querschnitt des Hauptteils (30) größer ist als der der Abdeckung (40).

20. Kochbehälter nach einem der vorhergehenden Ansprüche, wobei das Hauptteil (30) und die Abdeckung (40) zusammen ein erstes, vorzugsweise rechteckig geformtes Kochteil (31) festlegen, und ein zweites, vorzugsweise im Wesentlichen quadratisch geformtes Kochteil (36) vom ersten Kochteil (31) wegragt.

21. Kochbehälter nach Anspruch 20, wobei das erste Kochteil (31) ein erstes Nahrungsmittel rösten kann und das zweite Kochteil, (36) ein zweites Nahrungsmittel ohne zu rösten kochen kann.

22. Kochbehälter nach Anspruch 21, wobei das erste Nahrungsmittel geschnittenes Brot ist und das zweite Nahrungsmittel zumindest ein Ei aufweist.

23. Mikrowellenofen (70) mit einem Kochbehälter (20) nach einem der vorhergehenden Ansprüche.

## Revendications

1. Un récipient de cuisine (20) comprenant un corps (30) et un couvercle (40), le corps (30) comme le couvercle (40) comprenant une partie chauffante (52), qui génère la chaleur lorsqu'elle est irradiée par des micro-ondes, et une partie de transfert de chaleur (51) disposée, en fonctionnement, pour transférer la chaleur de la partie chauffante (52) à la nourriture dans le récipient (20), **caractérisé en ce que** le corps (30) et le couvercle (40) sont disposés sur une surface intérieure de celui-ci avec au moins un bossage (33, 43) qui, en fonctionnement, est en contact avec la nourriture dans le récipient (20).

2. Un récipient de cuisine selon la revendication 1, dans lequel deux ou plus de bossages sont disposés sur le corps (30) et/ou le couvercle (40).

3. Un récipient de cuisine selon la revendication 2, dans lequel trois ou plus de bossages sont espacés régulièrement les uns des autres.

4. Un récipient de cuisine selon l'une, quelconque des revendications précédentes, dans lequel le corps (30) comprend une partie centrale surélevée (32), les bossages du corps étant formés sur la partie centrale surélevée (32).

5. Un récipient de cuisine selon la revendication 4, dans lequel un canal (34) autour de la partie centrale surélevée (32) est formé avec des évents (35) de préférence espacés régulièrement pour l'évacuation de la vapeur.

6. Un récipient de cuisine selon l'une quelconque des revendications précédentes dans lequel le couvercle (40) comprend une partie centrale en saillie vers le bas (42), les bossages du couvercle (40) étant formés sur la partie centrale en saillie vers le bas (42).

7. Un récipient de cuisine selon la revendication 6, dans lequel un canal (44) autour de la partie centrale en saillie vers le bas (42) est formé d'évents (45) de préférence espacés régulièrement pour l'évacuation de la vapeur.

8. Un récipient de cuisine selon l'une quelconque des revendications 1 à 3, dans lequel le corps (30) et/ou le couvercle (40) est muni d' ne pluralité de trous (35, 45) de préférence espacés régulièrement pour permettre à la vapeur de s'échapper du récipient (20).

9. Un récipient de cuisine selon l'une quelconque des revendications précédentes, dans lequel chaque bossage (33, 43) a une forme convexe allongée.

10. Un récipient de cuisine selon la revendication 9, dans lequel chaque bossage (33) sur le corps (30) est disposé, en fonctionnement, de manière à être parallèle à chaque bossage (43) du couvercle (40).

11. Un récipient de cuisine selon l'une quelconque des revendications précédentes, dans lequel les surfaces intérieures du corps et du couvercle sont munies d'un revêtement (53), de préférence une résine fluorée, pour éviter le collage de la nourriture.

12. Un récipient de cuisine selon l'une quelconque des revendications précédentes, dans lequel les parties de transfert de chaleur (51) sont faites en aluminium et sont munies d'un revêtement (53), de préférence une résine fluorée, pour éviter la corrosion de l'aluminium.

13. Un récipient de cuisine selon l'une quelconque des revendications précédentes, dans lequel les parties chauffantes (52) sont faites d'un mélange de caoutchouc de silicone et de poudre de ferrite, le rapport de la poudre de ferrite sur le caoutchouc de silicone étant supérieur dans le corps (40) par rapport à celui dans le couvercle (30).

14. Un récipient de cuisine selon l'une quelconque des revendications précédentes, dans lequel la partie chauffante du corps (30) forme une couche plus épaisse que la partie chauffante du couvercle (40).

15. Un récipient de cuisine selon l'une quelconque des revendications précédentes, dans lequel le corps (30) et le couvercle (40) sont contenus dans des logements supérieur et inférieur (61, 62) respectivement, qui sont faits de matériau n'absorbant pas les micro-ondes.

16. Un récipient de cuisine selon la revendication 15, dans lequel les logements supérieur et inférieur (61, 62) sont faits d'un matériau capable de résister à la chaleur produite par le corps (30) et le couvercle (40), et dans lequel au moins des parties des logements (61, 62) sont en contact avec ou à proximité du corps (30) et du couvercle (40).

17. Un récipient de cuisine selon la revendication 15 ou 16, dans lequel le logement inférieur (62) est muni d'un trou de drainage (65) en bas de celui-ci.

18. Un récipient de cuisine selon la revendication 17, dans lequel la surface intérieure du logement inférieur (62) est incliné pour guider l'humidité vers le trou de drainage (65).

19. Un récipient de cuisine selon l'une quelconque des revendications précédentes, dans lequel la zone de section du corps (30) est plus large que celle du couvercle (40).

20. Un récipient de cuisine selon l'une quelconque des revendications précédentes, dans lequel le corps (30) et le couvercle (40) définissent ensemble une première partie de cuisine (31), qui est de préférence de forme rectangulaire, et une deuxième partie de cuisine (36), qui est de préférence de forme essentiellement carrée, et qui s'étend à partir de la première partie de cuisine (31).

21. Un récipient de cuisine selon la revendication 20, dans lequel ladite première partie de cuisine (31) est capable de griller un premier type de nourriture et ladite deuxième partie de cuisine (36) est capable de cuire sans griller un deuxième type de nourriture.

22. Un récipient de cuisine selon la revendication 21, dans lequel ledit premier type de nourriture est du pain en tranche et ledit deuxième type de nourriture comprend au moins un oeuf.

23. Un four à micro-ondes (70) comprenant un récipient de cuisine (20) selon l'une quelconque des revendications précédentes.
